# EUROPÄISCHE PATENTSCHRIFT

(11) **EP 2 261 599 B1**
(45) Veröffentlichungstag und Bekanntmachung des Hinweises auf die Patenterteilung: **02.01.2013**
(21) Anmeldenummer: 10178872.7
(22) Anmeldetag: 08.11.2001
(51) Int. Cl.: A61C 13/12, A61C 13/00, G01B 11/25

(54) **(Dentale) Oberflächenerfassung und -erzeugung**
(Dental) Surface mapping and generation
Relevé et réalisation de surfaces (dentaires)

(30) Priorität: 24.01.2001 DE 20101227 U; 08.11.2000 DE 20019033 U
(43) Veröffentlichungstag der Anmeldung: 15.12.2010
(62) Teilanmeldung aus: 01993809.1
(73) Patentinhaber: INSTITUT STRAUMANN AG, 4002 Basel (CH)
(72) Erfinder: Holzner, Stephan, 82166 Gräfelfing (DE); Gloger, Wolfram, 82166 Gräfelfing (DE); Mehl, Albert, 82166 Gräfelfing (DE); Weber, Gerhard, 82166 Gräfelfing (DE)
(74) Vertreter: Grünecker, Kinkeldey, Stockmair & Schwanhäusser

(56) Entgegenhaltungen:
- EP-A2- 0 348 061
- WO-A1-00/19929
- DE-A1- 19 513 881
- US-A- 5 257 203
- US-A- 5 533 895
- US-A- 5 768 134
- US-A- 5 879 158
- US-A- 5 975 893

## Beschreibung

### Beschreibung

Die vorliegende Erfindung betrifft Oberflächenerfassung und -erzeugungseinrichtungen sowie Verfahren zur Oberflächenerfassung und -erzeugung. Insbesondere und mit Vorzug befaßt sich die vorliegende Erfindung mit solchen Einrichtungen und Verfahren zur Erfassung und/oder Erzeugung von Oberflächen von Zähnen.

Die US 5 768 134 offenbart ein Verfahren zum Herstellen eines perfektionierten medizinischen Modells auf der Basis von digitaler Bildinformation eines Körperteils.

Die grundlegenden Technologien, auf denen die vorliegende Erfindung aufbaut oder mit denen sie kombinierbar ist, sind in den Offenlegungsschriflen DE 44 39 307 A1 und DE 197 21 688 A1 offenbart, die einerseits als nächstliegender Stand der Technik herangezogen werden, da die vorliegende Erfindung in allen ihren Ausgestaltungen auf dieser Technologie basiert, sie vorteilhaft weiterbildet und/oder verbessert, worin auch das Ziel der vorliegenden Erfindung in allen ihren Aspekten liegt.

Dieses Ziel wird mit einer Vorrichtung gemäß dem Anspruch erreicht.

Dabei ist vorzugsweise vorgesehen, daß die Einrichtungen zur Ablaufs- und/oder Aufwandsoptimierung Rohmaterial-Rückgewinnungseinrichtungen enthalten, und/oder daß die Einrichtungen zur Ablaufs- und/oder Aufwandsoptimierung eine automatisierte Steuerung der Intensität eines verwendeten Laserlichts enthalten. Alternativ oder zusätzlich ist es bevorzugt, wenn die Einrichtungen zur Ablaufs- und/oder Aufwandsoptimierung derart ausgelegt sind, daß zwei Halbbilder, die verschiedene Positionen oder Ansichten zeigen, ausgewertet werden, wobei insbesondere ein gepulster Laser zur Belichtung enthalten ist.

Weitere alternative oder zusätzliche Ausgestaltungen einer Oberflächenerfassungseinrichtung insbesondere zur Gewinnung von Oberflächendaten von Zähnen bestehen darin, daß die Einrichtungen zur Ablaufs- und/oder Aufwandsoptimierung Einrichtungen zum Ausführen einer Eichprozedur unter Auswertung von Überlagerungsfehlem an Matching-Stellen enthalten, und/oder daß eine Bildaufzeichnungseinrichtung, insbesondere ein CCD-Chip, so angeordnet ist, daß Zeilen unter Berücksichtigung des Scheimpflugwinkels senkrecht zur Verfahrrichtung des Meßtisches liegen.

Eine weitere Variante einer Oberflächenerfassungseinrichtung insbesondere zur Gewinnung von Oberflächendaten von Zähnen besteht darin, daß die Einrichtungen zur Ablaufs- und/oder Aufwandsoptimierung Einrichtungen zum Archivieren insbesondere von dreidimensionalen Kieferdaten und/oder zum Nachempfinden der Bißstellung von Ober- und Unterkiefern enthalten.

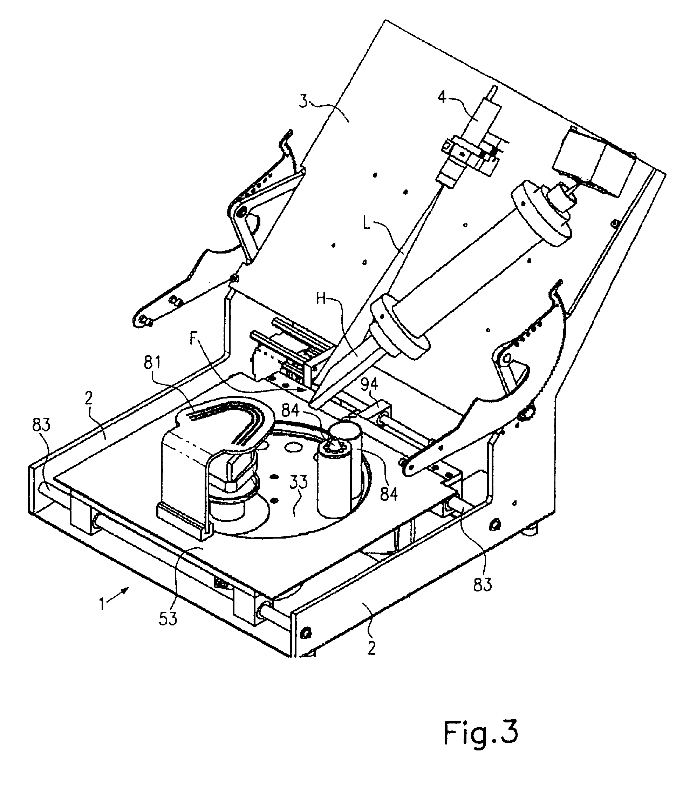

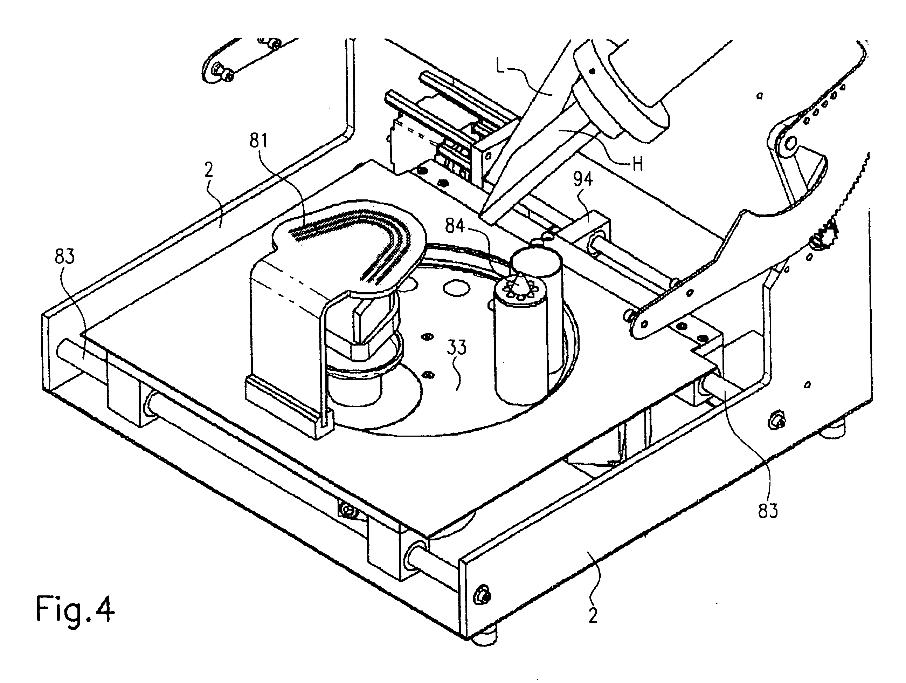

Spezielle vorzugsweise insbesondere mechanische Ausgestaltungen der Oberflächenerfassungscinrichtung richten sich nach dem Offenbarungsgehalt der Figuren 3 und 4 und/oder 5, 6 und 7 sowie der diesbezüglichen Beschreibung.

Bevorzugt ist es ferner, wenn bei der Oberflächenerfassungs- und Erzeugungseinrichtung insbesondere zur Herstellung von Zahnersatz die Einrichtungen zur Ablaufs- und/oder Aufwandsoptimierung Einrichtungen zur optimierten Vorbereitung wenigstens eines Zahnstumpfes zur Herstellung und zum Aufsetzen einer Zahnprothese darauf und/oder Einrichtungen zur Berücksichtigung der Bißstellung von Ober- und Unterkiefer enthalten.

Die Oberflächenerfassungs- und/oder Erzeugungsverfahren zur Erlangung des oben angegebenen Ziels sind dadurch gekennzeichnet, daß sie eine oder mehrere der vorstehend erläuterten Einrichtungen verwenden bzw. entsprechend analog funktionieren.

Schließlich wird durch noch ein Patientendatenarchivierungssystem geschaffen, das durch eine Chipkarte und/oder dezentrale Datenspeicher insbesondere für Zahndaten gekennzeichnet ist.

Einzelne Aspekte der Erfindung und von Beispielen werden nachfolgend noch näher erläutert.

Gemäß einem Beispiel ist ausgehend von Oberflächenerfassungstechnologien, -einrichtungen und -verfahren, wie sie in den vorstehend angegebenen und hierin durch Bezugnahme aufgenommenen Veröffentlichungen angegeben sind und die nachfolgend vereinfachend als "Scanner" bzw, "Scannen" bezeichnet werden, in Kombination mit beispielsweise einer Fräsmaschine eine Rohmaterial-Rückgewinnung vorgesehen. Der Scanner bildet zusammen mit der Fräsmaschine und geeigneter EDV eine CAD-CAM-Anlage insbesondere zur Herstellung von Gold- oder Platinzahnersatz. Die Rohstoff-Rückgewinnung kann bevorzugt dadurch realisiert werden, daß die beispielsweise verwendete Fräsmaschine mit Einrichtungen z.B. zum Absaugen von Gold- oder Platinstaub/-spänen ausgerüstet ist. In Anbetracht der hohen Kosten für die Rohmatenahen Gold oder Platin wird dadurch vorteilhaft eine wesentliche Senkung der Kosten für die Herstellung von Gold- oder Platinzahnersatz erreicht.

Gemäß einem weiteren Aspekt der vorliegenden Erfindung wird die in den eingangs angegebenen Veröffentlichungen offenbarte Scannertechnologie weiter verbessert.

Zum einen wird dies durch eine automatische Regelung der Intensität des verwendeten Laserlichts erreicht. Dabei wird vorzugsweise die Reflektivität der zu vernessenden beispielsweise Zahnoberfläche über die Intensität des z. B. von einem CCD-Chip aufgenommenen Lichtes ermittelt. Basierend auf dem Ermittlungsergebnis wird dann die Intensität des Laserlichts nachgeregelt. Die Verbesserung dieser Ausgestaltung besteht darin, daß dadurch Meßfehler aufgrund von Unter- oder Übersteuerungen des Meßsignals vermindert werden.

Die Scannertechnologie wird zum anderen durch eine Geschwindigkeitssteigerung verbessert, indem anstatt eines Vollbildes von der Kamera/dem CCD-Chip, bestehend aus zwei zusammengesetzten Halbbildern, zwei solche Halbbilder ausgewertet werden, die unterschiedliche Ansichten zeigen. Die unterschiedlichen Ansichten entstehen durch verschiedene Relativpositionen der zu erfassenden Oberfläche beispielsweise eines Zahnes und der Vorrichtung zum Aufnehmen dieser Oberfläche (z. B. eine Kamera mit einem oder alleine ein CCD-Chip).

Insbesondere die vorstehende Verbesserung, aber allgemein die verwendete Abtasttechnologie kann dadurch vorteilhaft weitergebildet werden, daß ähnlich einem Straboskapeffekt der verwendete Laser gepulst angesteuert und beispielsweise der Tisch, der das Objekt trägt, dessen Oberfläche erfaßt werden soll, wie z. B. einen Zahn oder ein Modell davon, insbesondere kontinuierlich verfahren wird. Durch den gepulsten Laserstrahl werden von jeder Relativposition von Objekt und Kamera Momentaufnahmen oder "Standaufnahmen" erstellt, da das Objekt während der kurzen Belichtungszeit mit einem Laserstrahlpuls scheinbar steht und in dieser Position von der Kamera aufgenommen werden kann. Besonders bevorzugt ist jeder einzelne Laserimpuls mit der Aufnahme eines Halbbildes gekoppelt.

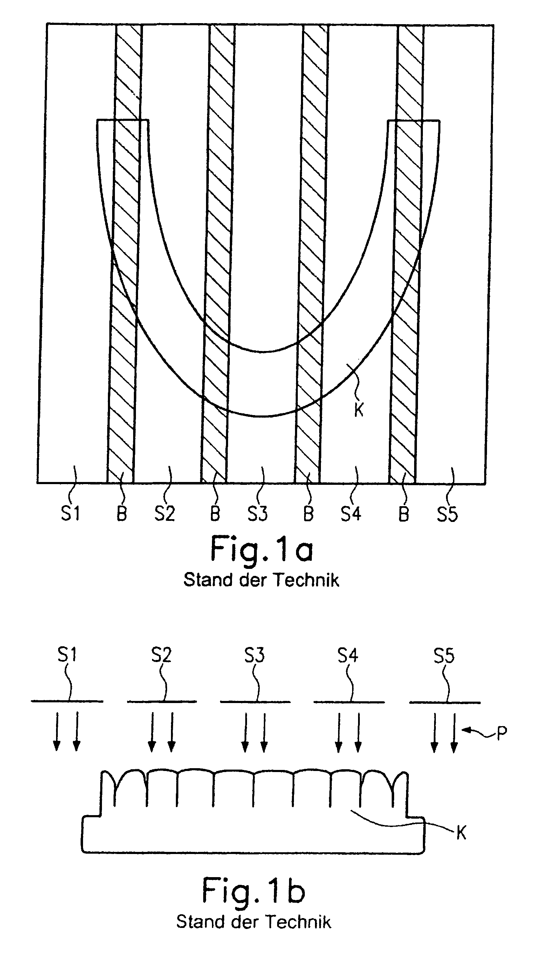

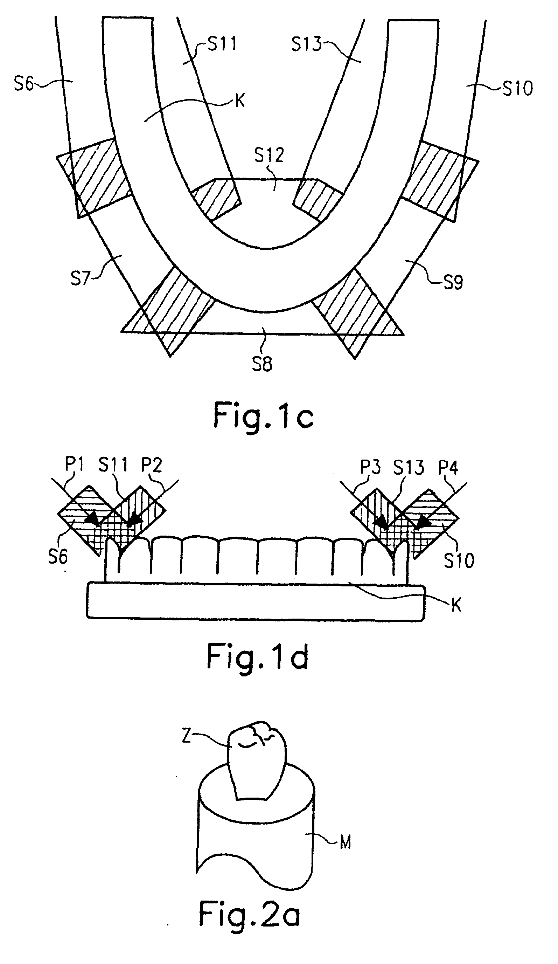

Noch eine weitere Verbesserung der Scannertechnologie besteht in einer Eichprozedur, die verschiedene räumliche Verzerrungen der ermittelten Meßgrößen korrigiert. Dabei wird ein Körper aus verschiedenen Ansichten vermessen. Die Messungen werden per Maiching-Algorittimus zusammengelegt. Die an verschiedenen Stellen des Objekts bei diesem Zusammenlegen auftretenden Überlagerungsfehler werden dahingehend analysiert, daß Abweichungen in allen Raumrichtungen erkannt werden. Aus diesen Abweichungen resultieren Eichfehler, aus denen wiederum Eichparameter in allen Raumrichtungen und Raumdrehungen errechnet werden. Diese Eichparameter können dann bei weiteren Messungen von der EDV automatisch berücksichtigt werden, wodurch in vorteilhafter Weise eine gesteigerte Meßgenauigkeit erreicht wird. Weitere Einzelheiten hierzu ergeben sich aus dem in der Fig. 1 dargestellten Ausführungsbeispiel.

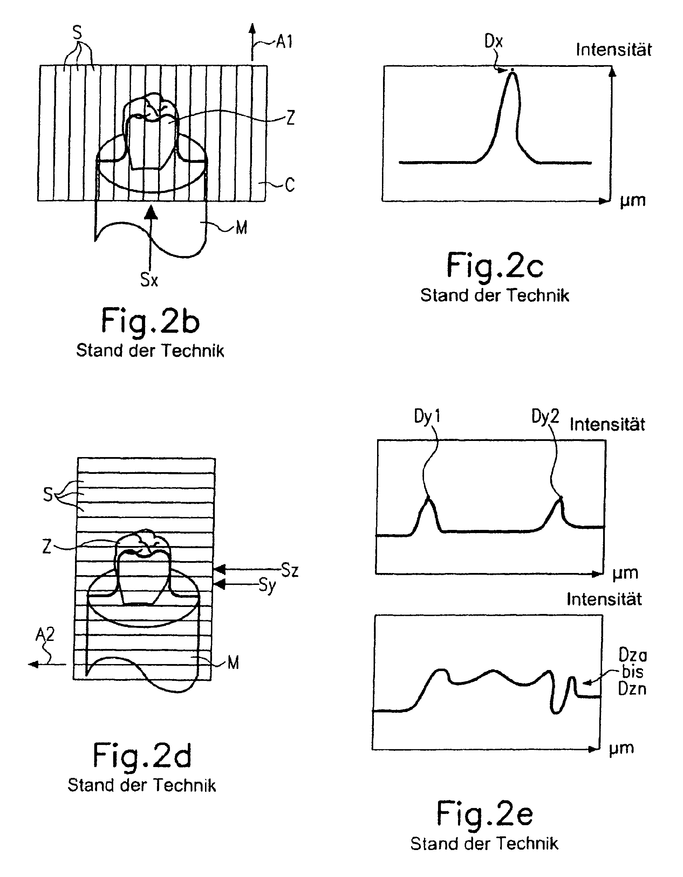

Des weiteren wird die Scannertechnologie gemäß dem oben angegebene Stand der Technik dadurch verbessert, das ein CCD-Chip (oder allgemein eine Oberflächenbilderfassungsvorrichtung) so angeordnet wird, daß beispielsweise Kamerazeilen unter Berücksichtigung des Scheimpflugwinkels senkrecht zu z. B. der Verfahrrichtung des Meßtisches liegen, auf dem das zu erfassende Objekt installiert ist. Weitere Einzelheiten hierzu sind in dem Ausführungsbeispiel gemäß der Figur 2 dargestellt. Dadurch wird eine bessere Ausnutzung des Meßfeldes für die Vermessung beispielsweise von Zähnen erreicht, wobei zu beachten ist, daß marktübliche Chips nicht quadratisch sind.

Die bekannte Scannertechnologie läßt sich außerdem noch dadurch verbessern, daß entsprechend der vorliegenden Erfindung Verfahr- und Schwenkachsen von Objektträger, Objekt und/oder Kamera so vorgesehen und angeordnet werden, daß eine Einsicht in alle im Kiefer vorkommenden Hinterschneidungen, wenn die Erfindung z. B. im Bereich von Zahnoberflächenerfassung zum Einsatz kommt, ermöglicht ist. Dies hat den Vorteil, daß eine vollautomatische Vermessung/Meß-Strategie zum Einsatz kommen kann.

Gemäß einem weiteren Aspekt der vorliegenden Erfindung werden mit Vorteil diverse EDV-Module beispielsweise in verschiedenen Feldern der Zahnmedizin eingesetzt.

So schafft ein Beispiel eine Scannertechnologie, die mit einer EDV, vorzugsweise in Form eines Standart-Computers mit Spezialsoftware als Steuereinrichtung, ausgestattet ist, die zur Archivierung z. B. von dreidimensionalen Kieferdaten, insbesondere Oberflächendaten, geeignet ist. Die Archivierung dient dem Ersatz bisheriger Archivierungsformen von solchen Daten in Form von Gipsmodellen. In vielen Bereichen der Zahnmedizin war es bisher erforderlich, Gipsmodelle von Patienten bis zu 10 Jahre lang aufzubewahren, was einen enormen Platzbedarf zur Folge hat. Die elektronische Archivierung dieser Daten schafft jedoch nicht nur hinsichtlich des Platzbedarfes Abhilfe, sondern ermöglicht auch eine schnellere, einfachere und kostengünstigere Nutzung der archivierten Daten, So ist es beispielsweise möglich, 3D-Meßdaten von ehemals gesunden Zahnoberflächen zu erfassen und zu archivieren. Dies ermöglicht nach Jahren, z. B. wenn ein Zahn ersetzt werden muß, eine Rekonstruktion des Zahns in Form eines Zahnersatzes, der beispielsweise anhand der archivierten Daten durch frästechnische Erzeugung seiner Oberflächen hergestellt werden kann.

Eine elektronische Archivierung von Kiefer-/Gebißdaten kann aber noch in vielerlei anderen Hinsichten vorteilhaft genutzt werden. So ermöglichen diese Daten mittels einer geeigneten EDV eine Nachempfindung der Bißstellung von Ober- und Unterkiefern. Insbesondere kann dies erzeugt werden, indem zunächst der Unterkiefer vermessen wird, dann ein Bißregistrat (Abdruck im Patientenmund, während er zubeißt) auf den Unterkiefer gelegt wird und nochmals vermessen wird. Damit sind beide Zahnoberflächen in der Bißsituation ermittelt. Beide Datensätze können getrennt oder zusammen visualisiert werden und alle damit verbundenen zahnärztlichen Analysen z. B. qualitativ oder quantitativ (in Form von Abstands- oder Volumenmessungen) durchgeführt werden. Zur Ergänzung kann auch der komplette Oberkiefer vermessen und mittels des Bißregistrats und beispielsweise einer Matching-Software räumlich referenziert werden. Ebenso können Kaubewegungen mittels Aufnahme der Kieferbewegung und Bißregistrat am Computer simuliert werden. Die Referenzierung der Meßdaten von Ober- und Unterkiefer kann auch zur Modulation von Zahnersatz im Zusammenhang mit der CAD-CAM-Technologie verwendet werden.

Ein weiteres Beispiel der Erfindung besteht in einer Scannertechnologie, die mit einer EDV ausgestattet ist, wie z. B. einem Standart-Computer mit einer entsprechenden Software als Steuereinrichtung, um die Bißstellung von Ober- und Unterkiefern auch mit besonderer Ausrichtung für eine kieferorthopädische Behandlung nachempfinden zu können. Eine Behandlungsplanung für z. B. eine Zahnspange kann dadurch simuliert werden, daß beispielsweise in der Software das Gebiß in Zahngruppen bis hin zu Einzelzähnen aufgegliedert wird. Solche Gruppen/Einelzähne können bewegt und die Endstellungen simuliert werden. Dies.ermöglicht Antworten auf Fragen, ob benötigter Platz auf dem Kieferkamm vorhanden ist und wie der Biß nach der Behandlung aussehen wird. Durch weitere EDV-/Software-Einrichtungen, die modular zusammengefügt werden können, ist eine Behandlungskontrolle möglich. Nach Zeitabschnitten kann ein Kiefer immer wieder gescannt werden. Die zeitlich aufeinander folgenden Aufnahmen können dann als interpolierter "Film" abgespielt werden. Dies ermöglicht einen Vergleich des Verlaufs der tatsächlichen Behandlung mit der geplanten Behandlung und die Festlegung/Durchführung von Korrekturen. Solche Aufnahmereihen können ferner archiviert werden und beispielsweise bei Prozessen eine Beweisführung erleichtern. Auch wird die Kommunikation mit Gutachtern und Kassen erleichtert und beschleunigt.

Ein weiterer Gesichtspunkt der vorliegenden Erfindung besteht in einer Scannertechnologie, die mit einer EDV/elektronischen Steuerung (beispielsweise durch Software) ausgestattet ist, um z. B. die Bißstellung von Ober- und Unterkiefern auch mit besonderer Ausrichtung für die kieferchirurgische Behandlung nachempfinden zu können. Im Rahmen dieses Aspektes der vorliegenden Erfindung ist insbesondere die Eingliederung von Meßdaten der Kieferknochen (ermittelt z. B. mit einem Computertomographen) mittels einer geeigneten Matching-Software vorgesehen. Die Behandlungsplanung (z. B. eine Operation des Kiefers) wird dadurch simuliert, daß in beispielsweise einer Software das Gebiß, der Kiefer und der Kieferknochen in Zahn-/Kieferabschnittsgruppen (bis hin zu Einzelzähnen) aufgegliedert wird. Die Gruppen/Einzelzähne können bewegt und die Endstellungen simuliert werden. Dies ermöglicht eine Beantwortung von Fragen, ob ein benötigter Platz vorhanden ist und wie der Patient nach der Behandlung aussehen wird. Ein weiteres EDV-/Software-Modul kann in diesem Fall für eine Behandlungskontrolle eingesetzt werden. Nach Ablauf von Zeitabschnitten wird jeweils der aktuelle Zustand gescannt. Die Aufnahmen über die Zeit können als interpolierter "Film" abgespielt werden. Der Verlauf der tatsächlichen Behandlung kann mit der geplanten Behandlung verglichen werden und es können eventuell erforderliche Korrekturen daraus abgeleitet werden. In vorteilhafter Weise ermöglicht dieser Aspekt der vorliegenden Erfindung die Planung und Simulation von Implantaten. Auch archivierte Aufnahmereihen zur Beweiserleichterung bei eventuellen Prozessen und leichtere und schnellere Kommunikation mit Gutachtern und Kassen liegen als weitere Vorteile vor.

Im Rahmen eines Beispiels liegt schließlich noch ein Patientendatenträger, wie beispielsweise eine Chipkarte, der sämtliche personenbezogenen Gesundheits- und Krankheitsdaten enthält. Ein solcher individueller Datenträger kann in ein Verwaltungs- und Archivierungssystem integriert sein, das insbesondere dezentrale Speichereinrichtungen zum Archivieren von großen Datenmengen enthält, auf die mittels Zugangseinrichtungen auf dem Datenträger zugegriffen werden kann. So lassen sich beispielsweise auch zahnmedizinische Patientenstammdaten, die 3D-Kiefer- und -Einzelzahndaten von Zahnoberflächen und innere Aufbauten von individuellen Zähnen sowie Erzeugungsdaten von eingesetztem Zahnersatz (Material- und z. B. Fräsdaten) enthalten können, archivieren und leicht verfügbar machen. Daneben werden ferner Krankenversicherungsdaten, digitale Röntgenaufnahmen, ehemals und aktuell behandelnde Ärzte und allgemein die gesamte Krankengeschichte eines Patienten gespeichert. Im Rahmen der Erfindung können ferner spezielle Lese- und Auswertegeräte vorgesehen und u. U. in dem System integriert sein. Damit werden als Vorteile beispielsweise eine doppelte Archivierung beim Patienten, bessere Rückverfolgungsmöglichkeiten für Krankenkassen und Datenverfügbarkeit auch bei Wohnortwechsel erreicht.

Ferner ist Gegenstand eines Beispiels eine weitere Variante/Ausgestaltung zur Realisierung einer gepulsten Messung, wie bereits weiter oben grundsätzlich dargestellt.

Eine entsprechende Oberflächenerfassungsein- oder -vorrichtung besteht beispielsweise aus einem Lineartisch, einer CCD-Kamera, einer Framegrabberkarte und einem Laserlinienmodul. Zur Datenerfassung wird die Laserlinie permanent auf das Meßobjekt projiziert. Der Meßtisch bewegt das Objekt schrittweise unter der Meßanordnung (Laserlinie und CCD-Chip) hindurch. Nach jedem Schritt erfolgt eine Messung.

Dabei ist der frühere genaue Ablauf folgendermaßen: Der Meßtisch fährt in eine Startposition und stoppt. Das Objekt muß ruhen, damit kein "Verwackeln" der Aufnahme zu Meßungenauigkeiten führt. Dann ließt die CCD-Kamera eine Zeile aus (Vollbild) und übergibt das Signal an die Framegrabberkarte. Anschließend wird der Tisch beschleunigt (Anfahrrampe). Danach wird der Tisch wieder abgebremst und in einer vorgegebenen Position gestoppt (Bremsrampe). Die CCD-Kamera ließt dann die nächste Zeile aus. Dieser Gesamtvorgang läuft unter Verdunkelung ab. Die Laserdiode kann nur auf eine gewisse Leistung hochgeregelt werden, damit das Signal nicht übersteuert.

Gemäß einem Beispiel ist als Neuerung vorgesehen, daß die Laserlinie stroboskopartig auf das Meßobjekt projiziert wird, d.h., daß regelmäßig Lichtblitze in Form einer Laserlinie auf das Objekt geworfen werden. Der Meßtisch bewegt das Objekt kontinuierlich unter der Meßanordnung (Laserlinie, CCD-Chip) hindurch. Gleichzeitig mit jedem Lichtblitz erfolgt eine Messung. Insbesondere fährt der Meßtisch mit kontrollierter/überwachter Geschwindigkeit, die mit der Blitzsteuerung abgestimmt ist. In vorzugsweise regelmäßigen Abständen (Zeit oder Verfahrweg des Tisches) wird ein Blitz ausgesandt und gleichzeitig ein Halbbild des CCD-Chips ausgelesen. Dieses Signal wird an die Framegrabberkarte übergeben und mittels spezieller Software ausgewertet. Die Blitzzeit ist so kurz, daß ein "Verwackeln", das durch die kontinuierliche Tischbewegung entstehen könnte, vernachlässigbar ist.

Mit der vorstehenden Variante wird das Meßverfahren um einen Faktor 5 beschleunigt, da die Anfahr- und Bremszeiten des Tisches entfallen und die Lichtblitze derart schnell getaktet werden können, daß mit Halbbildern ausgelesen werden kann. Als weiterer Vorteil ergibt sich, daß die Steuerung kostengünstiger gestaltet werden kann, da nur ein gleichmäßiger Vorschub gewährleistet und keine genaue Ruheposition eingestellt werden muß. Vorteilhaft ist ferner, daß die bisherigen opto-mechanischen Anordnungen weiter eingesetzt/verwendet werden können, da die vorliegende Neuerung im Hinblick auf Steuerung, Regelung und Software für die Komponenten realisiert werden kann bzw. besteht. Weiterhin ist von Vorteil, daß der verwendete Blitz wesentlich intensiver als das früher verwendete Lasersignal ist, wodurch die Messung auch bei Tageslicht erfolgen kann und der Meßraum nicht abgedunkelt werden muß, was die Arbeit und deren Aufwand und Zeitbedarf insbesondere beim Auswechseln von Meßobjekten wesentlich verringert.

Neben den bereits oben und vorstehend beschriebenen technischen Spezifikationen zum Thema "Stroboskoplaser" etc. liegen im Rahmen der Erfindung ferner mechanische Ausführungen, die in ihrem Konzept sowie konkreten Ausgestaltungen und auch Betriebsverfahren in Kombination und auch jeweils für sich alleine als schützenswert und schutzfähig angesehen werden.

Insbesondere gegenüber dem technischen Stand der Vorrichtung zur Herstellung eines Zahnersatzes gemäß der EP 98115809.0 beinhaltet die vorliegende Erfindung eine Reihe von Konzepten und Ausgestaltungen, die ein entsprechendes Gerät in der Herstellung drastisch verbilligen und funktionssicherer machen sowie insgesamt Verbesserungen gegenüber der technischen Lehre in der EP 98115809.0 darstellen. Weiterhin stellen diese Aspekte vorteilhafte und bevorzugte Weiterbildungen und Kombinationen der in der DE 44 39 307 A1 und DE 197 21 688 A1 offenbarten Technologie dar. Die einzelnen Merkmale und Merkmalskombinationen sind insbesondere, jedoch nicht zwingend oder ausschließlich, mit der weiter oben erläuterten Stroboskoptechnik zu kombinieren.

Nachfolgend wird die Erfindung und Beispiele lediglich exemplarisch anhand von Ausführungsbezspielen unter Bezugnahme auf die Zeichnung näher erläutert, in der:
- Fig. 1a, 1b: eine schematische Draufsicht auf einen Kiefer bzw. Frontansicht eines Kiefers mit eingezeichneten Abtaststreifen nach dem Stand der Technik ist,
- Fig. 1c, 1d: eine schematische Draufsicht auf einen Kiefer bzw. Frontansicht eines Kiefers mit eingezeichneten Abtaststreifen nach der Erfindung ist,
- Fig. 2a: eine perspektivische schematische Ansicht eines Meßobjektes in Form eines Zah- nes ist,
- Fig. 2b: eine schematische Ansicht des Meßobjektes aus der Fig. 2a mit eingezeichneten Abtaststreifen nach dem Stand der Technik ist,
- Fig. 2c: eine schematische Ansicht eines Signalbildes einer Abtastzeile aus der Fig. 2b ist,
- Fig. 2d: eine schematische Ansicht des Meßobjektes aus der Fig. 2a mit eingezeichneten Abtaststreifen nach der Erfindung ist,
- Fig. 2e: eine schematische Ansicht eines Signalbildes einer Abtastzeile aus der Fig. 2d ist,
- Fig. 3: eine schematische perspektivische Ansicht eines Ausfiihrungsbeispiels einer Obcrflächeneriassungseinnchtung schräg von oben ist,
- Fig. 4: eine vergrößerte Darstellung eines Teils aus der Fig. 3 ist,
- Fig. 5: eine schematische perspektivische Ansicht des Ausführungsbeispiels der Oberflä- chenerfassungseinrichtung aus der Fig. 3 schräg von oben in einer anderen Ein- stellung und vergrößert ist,
- Fig. 6: eine schematische perspektivische Ansicht des Ausführungsbeispiels der Oberflä- chenerfassungseinrichtung aus der Fig. 3 schräg von unten und vergrößert ist,
- Fig. 7: eine schematische perspektivische Ansicht des Ausführungsbeispiels der Oberflä- chenerfassungseinrichtung aus der Fig. 3 schräg von unten und vergrößert sowie gegenüber der Ansicht aus der Fig. 6 etwas gedreht ist,
- Fig. 8: eine graphische Darstellung eines Kiefers mit schematisch eingezeichneten Lagen von Meßstreifen auf der Basis von erfindungsgemäß eingescannten Daten ist,
- Fig. 9: eine graphische Darstellung des Kiefers aus der Fig. 8 erfindungsgemäß bearbeite- ten Zähnen ist,
- Fig. 10: eine schematische Teilansicht eines Kiefers zur Erläuterung eines weiteren Aspektes der Erfindung ist.
- Fig. 11: eine schematische Seitenansicht eines Kau- oder Bißsimulators zur Verdeutli- chung eines weiteren Aspektes der Erfindung ist, und
- Fig. 12: eine schematische Seitenansicht eines Kiefers aus der Fig. 11 in einer Oberflä- chenerfassungseinrichtung ist.

In den einzelnen Figuren der Zeichnung sind gleiche oder ähnliche oder gleich oder ähnlich wirkende Teile mit denselben Bezugszeichen versehen oder vergleichbar dargestellt, so daß sich Teile sowie deren Kombinationen, Funktionen und Wirkungsweisen für einen Fachmann auch aus der Betrachtung der Figuren der Zeichnung alleine, deren Vergleich und/oder den nachfolgend beschriebenen Angaben ggf. alleine ohne weiteres erschließen, auch wenn keine Bezugnahmen zwischen einzelnen Figuren und/oder zwischen Figuren und Text explizit angegeben oder dargestellt sind.

Zunächst wird ein herkömmliches Meßverfahren erläutert, um die Funktion eines entsprechenden Gerätes zu verstehen. Dieses Meßverfahren wird beispielsweise von der Firma DCS Forschungs- und Entwicklungs AG, Allschwil, Schweiz, benutzt und wurde überdies bereits 1999 öffentlich vorgestellt. Im Rahmen der vorliegenden Erfindung wird dieses Meßverfahren deutlich verbessert.

In den Fig. 1 und 2 ist schematisch eine Abtastung eines Kiefers K in einer Draufsicht bzw. einer Frontansicht verdeutlicht. Beispielsweise werden fünf Meßstreifen S1, S2, S3, S4 und S5 nebeneinander erfaßt. Die fünf Meßstreifen S1 bis S5 überlappen in Bereichen B, die in der Fig. 1a schraffiert dargestellt und in der Fig. 1b der Übersichtlichkeit halber weggelassen sind; Die Fig. 1b dient nur der Verdeutlichung der Lage der Meßstreifen S1 bis S5 in der Frontansicht des Kiefers K sowie der Richtung der Abtaststrahlung gemäß den Pfeilen P. Die Überlappungsbereiche B ermöglichen das Zusammenfügen der Daten der einzelnen Meßstreifen durch Matching-Verfahren zu einem Gesamtbild des Kiefers K.

Eine Variante der vorstehenden Technologie ist in den Fig. 1c und 1d ebenfalls in einer Draufsicht bzw. einer Frontansicht gezeigt. Bei dieser Methodik und mit den entsprechenden Einrichtungen werden Meßstreifen S6, S7, S8, S9, S10, S11, S12 und S13 erzeugt, die jedoch nur aus sogenannten Halbbildern bestehen, so daß zwar mehr Meßstrei fen als bei der Variante nach den Fig. 1a und 1b erzeugt und behandelt werden, diese Moßstreifen aber mit deutlich geringerem Datenumfang auskommen. Die Lage der Meßstreifen S6 bis S13 ist in der Draufsicht der Fig. 1 bezüglich des Kiefers K dargestellt. Die Bestrahlungsrichtungen sind durch Pfeile P1, P2, P3 und P4 exemplarisch für die Meßstreifen S6. S11 S13 bzw. S10 in der Fig. 1d schematische dargestellt. In der Fig. 1c sind wiederum Überlappungsbereiche B der einzelnen benachbarten Meßstreifen schraffiert eingezeichnet. Durch die bezüglich dem Stand der Technik geänderten Bestrahlungsriclttungen für die einzelnen Meßstreifen werden genauer Daten des Kiefers K erhalten, und zwar mit geringerem Daten- und Verarbeitungsaufkommen als beim Stand der Technik durch Verwendung von nur Halbbildern.

Ein einzelnes Meßobjekt in Form eines Zahnes Z ist schematisch in einer perspektivischen Ansicht in der Fig. 2a gezeigt, wie es auf einem Meßtopf M installiert ist, der zu diesem Zweck beispielsweise mit einer Knetmasse gefüllt ist, in die der Zahn Z mit seinem unteren Ende (nicht sichtbar) gesteckt ist.

Für diese Meßobjekt Z ist in der Fig. 2c die Lage von Meßstreifen oder Meßzeilen S schematisch dargestellt, und die Fig. 2c zeigt das Signalbild für einen Meßstreifen oder eine Meßzeile Sx, in der lediglich ein Meßpunkt Dx erhalten wird. In der Fig. 2b ist noch die Auslesrichtung (Zeilenrichtung) mit dem Pfeil A1 eingezeichnet. Die Summe aller Meßstreifen oder Meßzeilen S bildet die Fläche eines Chips C als Bilderfassungseinrichtung, bei dem es sich beispielsweise um einen CCD-Chip oder jegliche andere Kameraeinrichtung handeln kann.

Dagegen wird in einer Meßzeile oder in einem Meßstreifen S gemäß der Erfindung eine Mehrzahl von Meßpunkten, z.B. Dy1 und Dy2 oder Dza bis Dzn, erhalten, wie die Fig. 2d und 2e verdeutlichen, bei denen es sich um Darstellungen analog den Fig. 2b bzw. 2c handelt. Die Ausleserichtung ist dabei gemäß dem Pfeil A2 in der Fig. 2d und der Chip C sowie die Lage der Meßstreifen oder Meßzeilen S sind gegenüber dem Stand der Technik folglich um 90° gedreht. Durch diese erfindungsgemäße Anordnung werden in der Meßzeile Sy zwei Meßpunkte Dy1 und Dy2 erhalten. Die Messung in der Zeile Sz fahrt sogar zu einer Vielzahl von Meßpunkten Dza bis Dzn. Für die Auswertung wird dann vorzugsweise mittels einer Software die Chipanordnung wie beim Stand der Technik (siehe Fig. 2b) rückgerechnet und simuliert. Die damit wieder wie beim Stand der Technik erhaltene Ausleserichtung enthält aber wiederum je Linie oder Zeile mehrere Meßpunkte, die rechnerisch erfaßt werden können als zunächst 1. Punkt, dann 2. Punkt usw. Durch diesen Aspekt der Erfindung werden bei geringerem Aufwand durch Heranziehung nur von Halbbildern dennoch mehr Informationen erhalten, so daß die Genauigkeit durch das Beispiel gegenüber dem genannten Stand der Technik noch zunimmt.

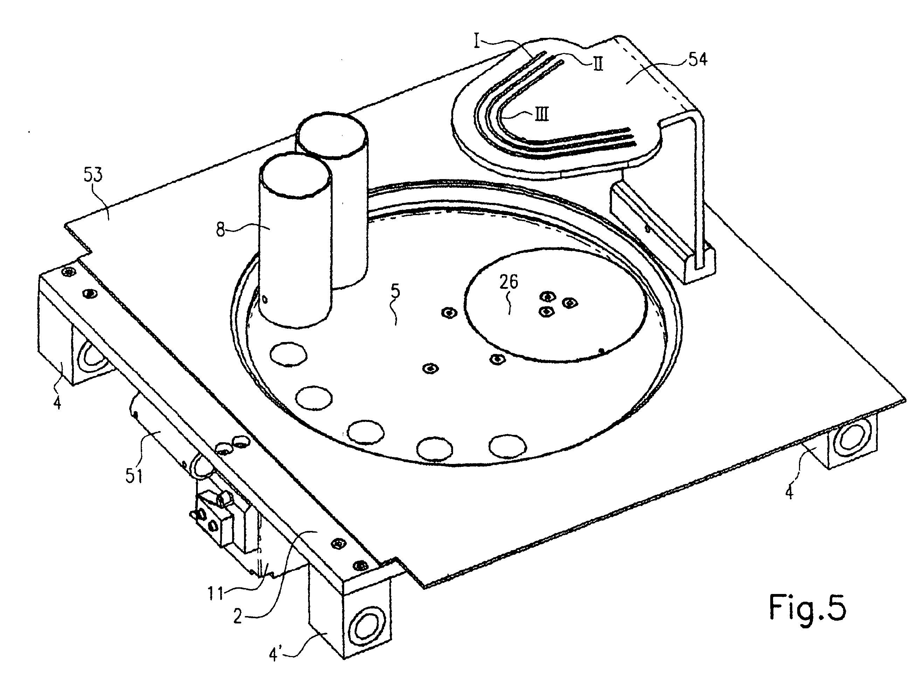

In den Fig. 3 und 4, die eine vergrößerte Darstellung eines Teils der Fig. 3 ist, ist eine Oberflächenerfassungseinrichtung 1 mit einer Laseroptik 4 dargestellt, von der ein Laserlinienstrahl L ausgeht. Der Schnittpunkt des Laserlinienstrahls L mit dem rechteckigen, vom Objektiv ausgehenden Bildfeld F definiert das Meßfeld F. Jedes zu vermessende Objekt muß durch dieses Meßfeld F durchgefahren werden. Diese Einzelheit gilt auch für die Ausgestaltungen gemäß den Fig. 5, 6 und 7, auch wenn sie dort aus Darstellungszwecken der übrigen Merkmale nicht mehr gezeigt ist. Insofern wurde zur Vermeidung von Wiederholungen bei der nachfolgenden Befassung mit den Fig. 5, 6 und 7 darauf nicht mehr eingegangen; der Einsatz dieser Technik ist jedoch Für den Fachmann selbstverständlich als auch dort einsetzbar zu erkennen und zu verstehen.

Nachfolgend wird, soweit die Ausgestaltung identisch oder vergleichbar ist, zur Vermeidung von Wiederholungen auch auf die Fig. 5, 6 und 7 Bezug genommen.

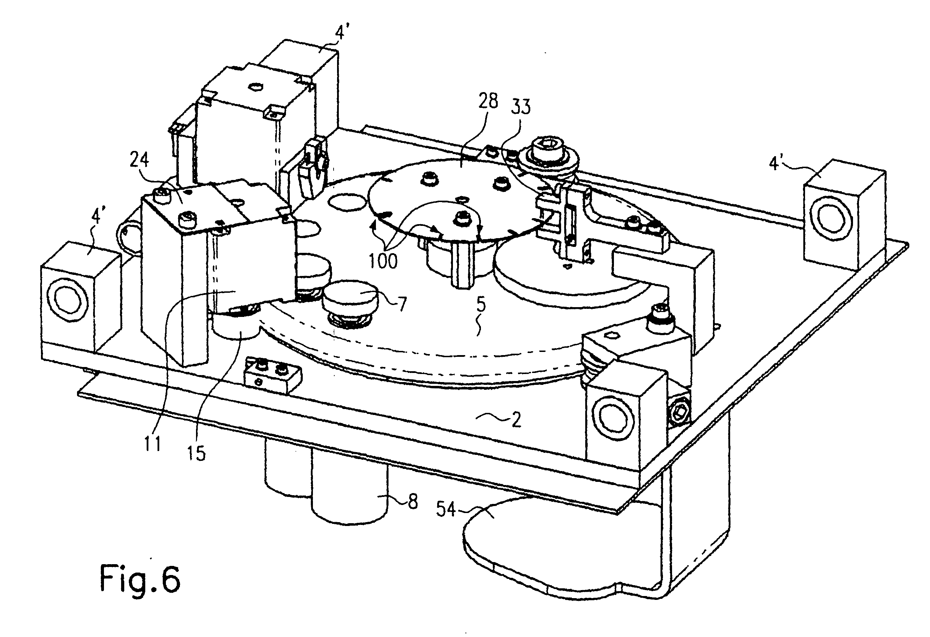

Das "Durchfahren" des Meßfeldes F wird mittels einer Linearführung 83 (oder Bezugszeichen 4' in den Fig. 5 und 6) bewerkstelligt. Um mehrere Einzelobjekte, wie insbesondere Zähne, unter dem Meßfeld positionieren zu können, rotiert ein Drehteller 33 (oder Bezugszeichen 5 in den Fig. 5, 6 und 7) von Meßtopf 84 zu Meßtopf 84 (in der Fig. 5 sind die Meßtöpfe mit dem Bezugszeichen 8 bezeichnet). In der Fig. 3 sind exemplarisch nur zwei Meßtöpfe 84 eingezeichnet (ebenfalls in der Fig. 5 z.B. nur zwei Meßtöpfe 8), wobei beispielsweise sieben Stück insgesamt montiert werden können.

Ist ein mit einem Zahn bestückter Meßtopf 84 (oder 8 in der Fig. 5) im Meßfeld angelangt, so stoppt die Rotation des großen Drehtellers 33 (oder 5 in den Fig. 5, 6 und 7). Der Drehteller 33 (oder 5 in den Fig. 5, 6 und 7) dient also nur zur Positionierung der mit Einzelzähnen bestücken Töpfe 84 (oder 8 in Fig. 5) und/oder eines Kiefers, worauf später eingegangen wird. Die Messung selbst erfolgt, wie oben erläutert wurde, mittels einer Linearbewegung des Meßtisches 53 auf den Linearlagem 83 oder 4' (Fig. 5).

Es entsteht ein Meßstreifen, der nur eine Seite des zu vermessende Zahnes sieht. Um weitere Meßstreifen aus weiteren Blickwinkeln erfassen zu können, kann der sich im Meßbereich befindliche Topf 84 (oder 8 in der Fig. 5) zwischen den einzelnen Messungen um eine eigene Achse gedreht werden. Dies führt z.B. zu acht Ansichten bzw. der Topf 84 (oder 8 in der Fig. 5) wird zwischen den Messungen um jeweils 45° um seine eigene Achse gedreht. Es entstehen in einem solchen Fall also acht Meßstreifen aus verschiedenen Ansichten. Teile der gewonnenen Oberflächeninformationen kommen in mehreren Meßstreifen vor. Mittels dieser Überlappungsbereiche können geeignete Einrichtungen oder Verfahren in Form beispielsweise einer bereits weiter oben erläuterte Matching-Software die einzelnen Meßstreifen zu einem kompletten 3D-Oberflächenbild eines Einzelzahns mit hoher Meßgenauigkeit zusammensetzen.

Mit diesen Daten kann nun bereits der Innendatensatz einer Zahnkrone gefräst werden. Neben Einzelkronen können auch mehrfache Einzelzähne zu einer Brücke zusammengefaßt werden. Um Brücken fräsen zu können, muß die räumliche Lage mehrerer Einzelkronen zueinander möglichst schnell erfaßt werden. Dazu wird ein komplettes Kiefermodell auf dieselbe Weise wie der Einzelzahn vermessen. Es wird auf einen zusätzlichen Drehteller 26 gestellt, der in dem Drehteller 5 in der Fig. 5 vorgesehen ist.

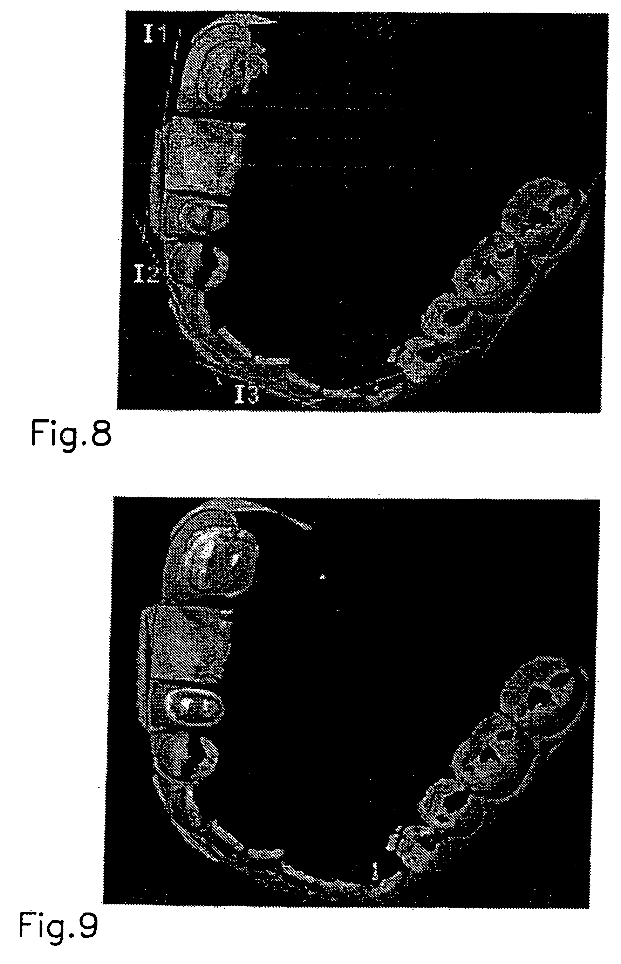

Das Ergebnis ist im Bild der Fig. 8 zu sehen (Die Richtung der Meßstreifen sind als fünf weiße Linien (exemplarisch angegeben sind die Bezeichnungen I1, I2 und I3 und im übrigen sind nur die Linien eingezeichnet) zu erkennen. Dieses Meßergebnis enthält zwar nicht alle Daten des Kiefers, jedoch sind außenseitig ausreichend viele Daten vorhanden, um diese mit den Daten der Einzelstümpfe automatisch machen zu können.

Danach beginnt mit geeigneten Einrichtungen oder verfahrensmäßig ein Software-Suchlauf der die Daten zur Übereinstimmung bringt. Das Ergebnis sieht man im Bild der Fig. 9. Die beiden hervorgehobenen Datensätze des ersten Zahns oben links und des nächsten Zahns in dem Kiefermodell nach der Lücke stellen die referenzierten Einzelzähne dar.

Nachfolgend werden weitere Verbesserungen dargestellt und erläutert.

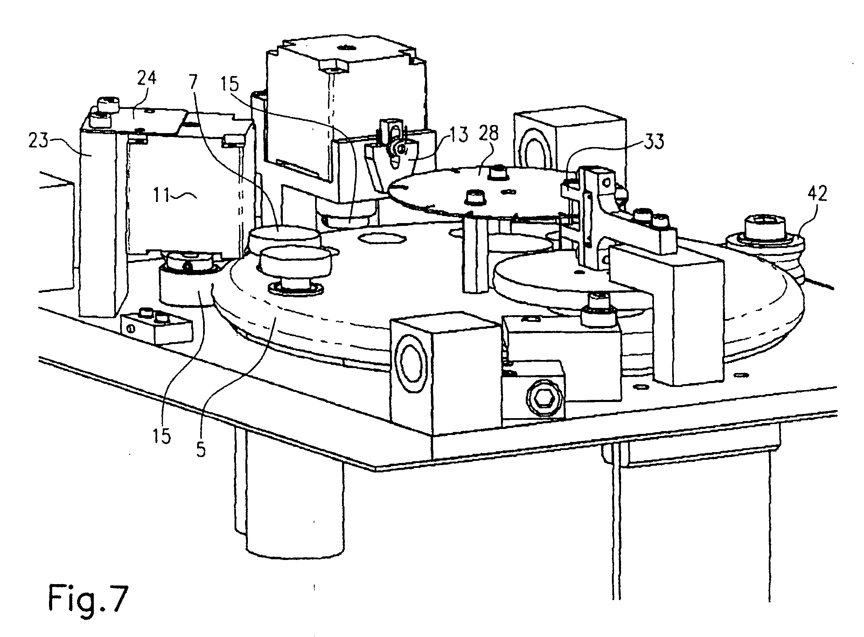

Unter Bezugnahme auf die Fig. 5, 6 und 7, wobei die Fig. 5 eine perspektivische Draufsicht und die Fig. 6 und 7 perspektivische Unteransichten derselben Vorrichtung darstellen, dient ein Drehteller 5 dazu, verschiedene Meßtöpfe 8 für Einzelzähne unter die Lasermeßanordnung (vergleiche Fig. 3) zu transportieren. Dieser Drehteller 5 wird mit einem Reibrad 15 (siehe Fig. 6) angetrieben. Dieses Reibrad 15 wird mittels eines Federblechs 24 (siehe Fig. 6) stirnseitig an den Drehteller 5 angedrückt. Dadurch wird ein etwaiger Verschleiß einer Gummioberfläche oder des Gummimaterials des Reibrades 15 ausgeglichen.

Die Position des Drehtellers 5 wird mittels einer Encoderscheibe 28 festgestellt. Im vorliegenden Fall ist die Scheibe als Blech 28 (siehe Fig. 6) ausgeführt, das Schlitze 100 genau an den Stellen aufweist, an denen benötigte Stopp-Positionen liegen. Die Schlitze 100 werden mittels einer Lichtschranke 33 (siehe Fig. 6) erkannt. In einer geeigneten Einrichtung oder verfahrensmäßig wertet eine Steuerungssoftware die Lichtschrankensignale aus und startet/stoppt den Tisch oder Teller 5. Der Drehteller 5 enthält sieben Positionen/Töpfe für Einzelzähne, Sollte eine Arbeit mehr als sieben Präparationen/Zähne enthalten (maximal sind 14 pro Kiefer möglich), so kann die Arbeit in 2 Chargen gescannt werden.

Vorteile der vorstehend erläuterten Vorrichtungen:
- sehr günstige Herstellkosten, überall verfügbar.
- kein Verschleiß
- Laufruhe
- exakte Positionskenntnis

Alternativ zum Reibrad 15 kann beispielsweise auch ein Riemenrad oder ein Zahnriemen eingesetzt werden.

Als Stand der Technik wird auf einen Scanner der Firma DCS Forschungs- und Entwicklungs AG, Allschwil, Schweiz, Bezug genommen, der erstmals auf der Fachmesse IDS Köln 1999 öffentlich präsentiert wurde.

Der Drehteller 5 wurde bei diesem Stand der Technik für denselben Zweck genutzt und war außen verzahnt. Mittels eines kleinen Kunststoffzahnrads wurde der Teller angetrieben. Die WegahschnittelDrehwinkel wurden durch eine in der Software festgelegte Anzahl von Verfahrschritten zurückgelegt. Es gab keine Rückmeldung an die Steuerung, ob der Winkel auch eingehalten wurde. Der Teller enthielt 14 Töpfe, die erlauben, alle maximal 14 Stümpfe pro Kiefer in einem Scangang zu vermessen. Diese vorbekannte Technik hat folgende Nachteile:
- Außenverzahnung sehr teuer und extrem schlecht lieferbar
- das kleine Kunststoffzahnrad war starkem Verschleiß unterworfen
- Laufgeräusche
- Fehlende Rückmeldung über die Wegposition
- die nötigen 14 Töpfe (statt vorliegend vorzugsweise sieben) verursachen unverhältnismäßig hohen Kosten für den unwahrscheinlichen Fall, daß mehr als sieben zusammenhängende Zahnstümpfe pro Arbeit vorkommen; die 14 Töpfe erfordern darüber hinaus sehr großen Bauraum und bestimmten Größe und Gewicht.

Durch weitere Maßnahmen kann auch noch eine Verbilligung der Rahmenkonstruktion erreicht werden. Dazu ist der Rahmen des Gerätes / der Vorrichtung auf zwei Führungsstangen 83 (vergleiche Fig. 3 und 4) aufgehängt. Der komplett Rahmen des Gerätes besteht also lediglich aus zwei Seitenteilen 2 (vergleiche Fig. 3 und 4), den Führungsstangen 83 (vergleiche Fig. 3 und 4) sowie einer Optikplatte (Fig. 5). Ungenauigkeiten, die durch die mechanische Ausführung der Linearstangenführung entstehen, werden durch Software ( z.B. mittels sogenannten "Look-Up-Tabtes") ausgeglichen. Eine Präzisionsspindel 94 (vergleiche Fig. 3 und 4) ist auf der Seite des Verfahrtisches angebracht, auf der sich die Laseranordnung befinde Winkelfehler der Spindel wirken sich dadurch weniger aus. Die Vorteile dieser Ausgestaltung sind geringe Herstellungskosten, hohe Präzision, deutlich geringeres Transportgewicht und kleinere Bauweise.

Bezüglich der vorerläuterten Ausgestaltung wurden bei der von der Firma DCS Forschungs-und Entwicklungs AG, Allschwil, Schweiz, bekannt gewordenen Vorrichtung anstelle von 2 Linearstangenführungen geschliffene Linearführungen mit Kugelkäfigen verwendet. Dadurch wurde eine massive und hochgenau zu fertigende 8-teilige Rahmenkonstruktion aus massiven Metallplatten nötig. Aus Platzgründen konnte die Antriebsspindel nur auf der der Laseranordnung gegenüber liegenden Seite des Verfahrtisches angebracht werden, was bei etwas Spiel der Spindel zu Winkelfehlern führt.

Eine weitere Verbesserung gegenüber dem genannten Stand der Technik kann zum elektrischen Schutz der Laserdiode vorgenommen werden. Dazu sind die Laseroptik, die Laserdiode und die Anstcuerelektronik für die Laserdiode zusammen in einem Metallgehäuse untergebracht. Daraus ergibt sich als Vorteile ein besserer Schutz für die Diode, insbesondere gegen elektrostatische Aufladungen von außen, sowie ein schneller Austausch bei Reparaturfällen.

Bei dem Stand der Technik in Form der bekannt gewordenen Vorrichtung der Firma DCS Forschungs- und Entwicklungs AG, Allschwil, Schweiz, sind die Elektronik und die Diode getrennt angeordnet. Nach Abnahme des Gerätegehäuses liegen beide Komponenten offen, so daß Servicepersonal die Teile berühren und somit optisch beschädigen kann.

Weiterhin sind gegenüber dem genannten Stand der Technik Verbesserungen bei der Einjustierung von Kiefermodellen möglich. Um zu vermessende Kiefermodelle optimal auf den Meßbereich einjustieren zu können, benötigt man eine Schablone 54 (siehe Fig. 5). Da es Kiefermodelle mit verschiedenen Durchmessern gibt (z.B. für Kinder und Erwachsene), muß das Kiefermodell entsprechend der Größe angepaßt werden. Zu diesem Zweck werden beispielsweise 3 verschiedene Justagekonturen I, II und III auf die transparente Plexiglasscheibe, aus der die Schablone 54 vorzugsweise gebildet ist, graviert oder anderweitig geeignet aufgebracht.

Ferner lassen sich bei der Drehung der Einzeltöpfe um z.B. jeweils 45° weitere Verbesserungen erreichen. Der Drehteller 5 (Fig. 5, 6 und 7) transportiert die Einzeltöpfe 8 zur Meßposition vor dem Reibrad 15. Während der Drehteller 5 verfährt, wird der Reibkontakt des Topfes 8 zum Reibrad 15 automatisch hergestellt. Die Neuerung besteht darin, daß das Reibrad 15 aus Gummi besteht oder zumindest eine Gummi-Laufbberfläche hat, das Gegenrad 7 jedoch aus Vollmetall. Dies hat die Vorteile eines geringeren Preises, einer einfachen Fertigung sowie einer hohen Lebensdauer. Beim Stand der Technik gemäß der Vorrichtung der Firma DCS Forschungs- und Entwicklungs AG, Allschwil, Schweiz, war das Reibrad aus Metall gefertigt und alle Gegenräder waren mit O-Ringen aus Gummi überzogen. Die Nachteile davon sind, daß die O-Ringe nach gewisser Lebensdauer rissen und die Fertigungskosten hoch sind.

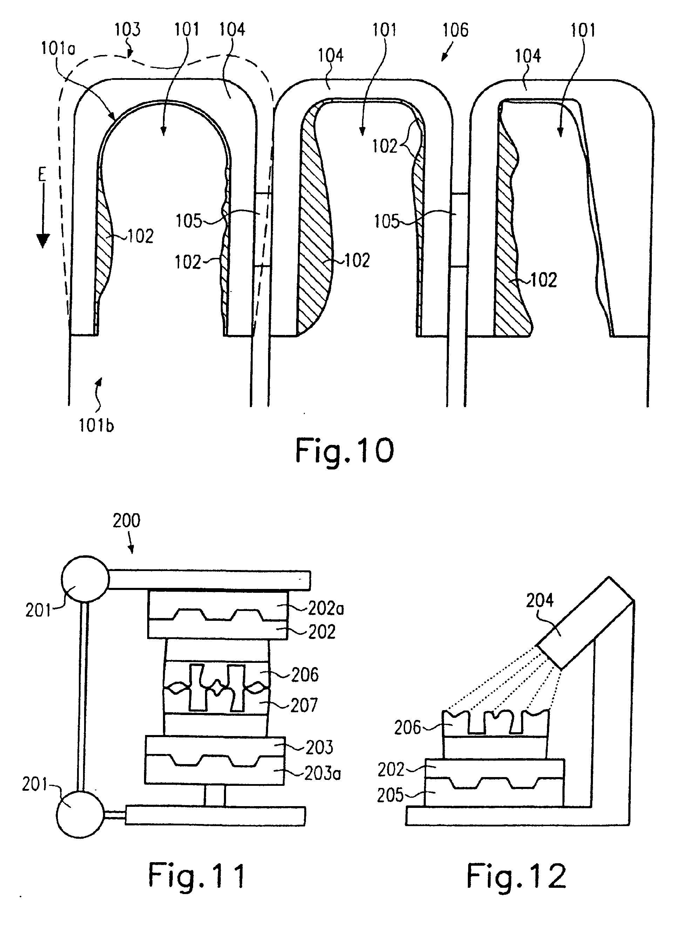

Ein weiterer Aspekt der Erfindung wird unter Bezugnahme auf die Fig. 10 erläutert. Dargestellt sind 3 Zahnstümpfe 101, bestehend jeweils aus einem beschliffenen Teil 101 a und einem Restzahnbereich 101b. Das Beschleifen erfolgt manuell von einem Zahnarzt und führt zwangsweise zu Hinterschneidungen 102, die bei Betrachtung mehrerer nebeneinander liegender Einzelzähne bzw. deren Stümpfe 101 in Form, Lage und Größe unterschiedlich ausfallen.

Auf die Zahnstümpfe 101 zum Aufbau einer angestrebten Prothese 103, deren Gesamtsilhouette lediglich exemplarisch beim in der Fig. 10 ganz links gezeigten Stumpf 101 gestrichelt dargestellt ist, wird zunächst für wenigstens einen Stumpf 101 ein sogenanntes Käppchen 104 hergestellt, das in der Regel in genau einer Einschub- oder Aufsteckrichtung gemäß dem Pfeil E über den Stumpf 101 geschoben werden kann. Dabei ist es nicht möglich, daß das Käppchen 104 die Hinterschneidungen 102 füllt, da ein Aufschieben sonst nicht mehr möglich wäre. In dem im Zusammenhang mit dem vorliegenden Ausführungsbeispiel gezeigten Fall liegen 3 Stümpfe 101 nebeneinander und sind entsprechend 3 Käppchen 104 zu einer Brücke zusammengefaßt, indem jeweils benachbarte Käppchen 104 mittels jeweils einem Steg 105 verbunden sind.

Bei der Gestaltung der Gesamtheit aller Käppchen 104 muß nun eine optimale Einschub- oder Aufsteckrichtung ermittelt werden, bei der die Hinterschneidungen 102, die sich beispielsweise auch durch bezüglich der anderen Stümpfe 101 Schräglage eines Stumpfes 101, wie in der Fig. 10 beim ganz rechten Stumpf 101 gezeigt ist, bilden, minimiert werden.

Dies kann mittels der von den Stümpfen 1 erhaltenen 3D-Daten vorab durchgeführt werden. Dazu wird, wie im übrigen bereits in den vorliegenden Unterlagen ausführlich dargestellt ist, ein 3D-Datensatz mittels erfindungsgemäßem Scannen erstellt und für Modellrechnungen zur Ermittlung der optimalen Einschub- oder Aufsteckrichtung verwendet. Bei diesem Aspekt des erfindungsgemäßen Verfahrens werden nacheinander verschiedene Aufsteckrichfungen zu Grunde gelegt und für die jeweiligen Resultate der "Totraum", der durch die Hinterschneidungen 102 bedingt ist, ermittelt. Die optimale Einschubrichtung A wird dadurch erhalten, daß die Variante mit dem kleinsten "Totraum" bestimmt wird.

Insbesondere durch eine Schräglage eines verbliebenen Stumpfes 101, aber auch infolge anderer Bearbeitungsungenauigkeiten durch den Zahnarzt können Fälle auftreten, in denen ein Käppchen bezogen auf einen Restzahnbereich 101b stellenweise eine Wanddicke von 0 mm haben müßte, In einem solchen Fall ist grundsätzlich keine Prothese herstellbar. Es müssen für die weitere Vorgehensweise zunächst zeit- und kostenaufwendige Nachbearbeitungen eines entsprechenden Zahnstumpfes 101 erfolgen, wobei diese Arbeiten nicht sicher zu einem brauchbaren Ergebnis führen.

Neben der Optimierung der Einschubrichtung E zur Minimierung der Hinterschneidungen oder "Toträume" 102 kann die vorliegende Erfindung zu einer weiteren Verbesserung der Vorgehensweise zur Herstellung von Zahnprothesen genutzt werden. Mittels der erfaßten (gescannten) 3D-Daten lassen sich Empfehlungen für den behandelnden Zahnarzt erstellen, durch welche Nachbearbeitungen der Zahnstümpfe eher eine Verbesserung von Sitz und Stabilität der herzustellende Prothese, einschließlich deutlicher Verringerung der Hinterschneidungen oder der "Toträume" 102 erreicht werden können. Dazu wird das Verfahren dahingehend erweitert, daß bezüglich eines erfaßten 3D-Datensatzes von einem Zahnstumpf 101 oder in Kombination mehreren Zahnstümpfen 101 eine optimale Aufsteckrichtung für Käppchen 104, insbesondere eine Verbindung von mehreren Käppchen 104 zu einer Brücke 106, unter der Maßgabe berechnet wird, daß Formänderungen an dem Zahnstumpf/den Zahnstümpfen 101 möglich sind. Das erfindungsgemäße Verfahren und System dient damit nicht nur dazu, eine Anpassung an gegebene Umstände für die Herstellung und das Aufstecken von Käppchen 104 oder Brücken 106 zu ermitteln, sondern auch dazu, die gegebenen Umstände zu verändern, um das Ergebnis, d. h. die Prothese, zu optimieren. Beispielsweise kann bei dem Verfahren und System vorgesehen sein, daß eine graphische Anzeige der Stümpfe einschließlich z. B. speziell eingefärbte Bereiche für Nachbearbeitungen enthalten ist, die als Grundlage für einen Dialog zwischen einem Zahnlabor und einem Zahnarzt dient.

Durch die Erfindung und die Beispiele in ihren vorstehend erläuterten Ausprägungen wird in vorteilhafter Weise feiner die Möglichkeit für eine Qualitätssicherung geschaffen, einschließlich insbesondere eindeutigen Zuordnungen von Behandlungsergebnissen zum Zahnarzt, der die Zahnstümpfe zurecht schleift, oder zum Zahnlabor, das die Käppchsn/Kronen/Brücken anfertigt. Streitigkeiten wegen Paßungenauigkeiten können damit erstmals eindeutig geklärt werden. In vorteilhafter Weise kann dabei ferner ausgenutzt werden, daß sämtliche Anfangsdaten sowie auch Daten von zwischen Zuständen lückenlos auf besonders einfache Weise und jederzeit wieder zugreifbar archiviert werden können.

Das vorstehend unter Bezugnahme auf die Fig. 10 erläuterte Verfahren und seine Varianten ist äquivalent zu entsprechend ausgebildeten Einrichtungen, mittels denen diese Verfahren durchgeführt werden können, so daß auch solche Einrichtungen, die dem Fachmann durch die Darstellungen der Verfahren in ihren allgemeinen und speziellen Ausprägungen ohne weiteres sofort klar sind, als in den vorliegenden Unterlagen offenbart gelten.

Ein weiterer Aspekt befaßt sich mit der automatischen Generierung der Kaufläche einer Zahnprothese unter Berücksichtigung des Gegenbisses (Oberkiefer zu Unterkiefer). Bei dem in den Fig. 11 und 12 verdeutlichten Ausführungsbeispiel sind die nachfolgend erläuterten Schritte vorgesehen:
1. Einsetzen und Einjustieren von Ober- und Unterkiefer 206 bzw. 207 in einen Kausimulator oder Artikulator 200 mit Einstellgelenken 201, bis die Bißsituation simuliert ist, gemäß der Fig. 11. Die Aufnahmen 202/202a und 203/203a von Ober- und Unterkiefer 206 bzw. 207 haben eine erfaßbare räumliche Lage. Dazu haben die Aufnahmen 202/202a und 203/203a z.B. jeweils eine definierte Null-Lage oder eine Null-Lage zueinander. Jede Aufnahme 202/202a und 2031203a ist zweiteilig und besteht jeweils aus einer Aufnahmenbasis 202a bzw. 203a, die fest am Artikulator 200 installiert ist, und eine Kieferhalterung 202 bzw. 203, an der jeweils der Oberkiefer 206 bzw. der Unterkiefer 207 angebracht wird.
2. Einlesen / Aufnehmen von z. B. 6 Freiheitsgraden:
   2 Möglichkeiten: - Manuelles ablesen einer Skala
      - Auslesen von Meßgebern
         Mit dem Artikulator 200 wird unter Berücksichtigung von Ober- und Unterkiefer 206 bzw. 207 die optimale/richtige Stellung der Aufnahmen 202/202a und 203/203a, d.h. eigentlich der jeweiligen Aufnahmenbasis 202a bzw. 203a ermittelt, gemäß der Fig. 11. Dies kann an dafür an dem Artikulator 200 vorgesehenen und angebrachten Skalen (nicht gezeigt) oder mittels Weg- und Winkelgebern (nicht gezeigt) automatisch geschehen. Zu beachten ist noch, daß der Artikulator 200 vorzugsweise eine Einstellung von Ober- und Unterkiefer 206 bzw. 207 zueinander in vorzugsweise sechs Freiheitsgraden ermöglicht.
3. Einsetzen der entsprechenden Kieferhalterung 202 oder 203 mit dem Oberkiefermodell 206 oder dem Unterkiefemnodell 207 in eine Halterung 205 analog zu den Aufnahmebasen 202a und 203a des Scanners 204 gemäß Fig. 12, wobei die räumlichen Lage der Halterung 205 zum Meßsystem oder dem Datensystem des Scanners 204 bekannt ist.
4. Durch Software erfolgt dann eine Referenzierung.
5. Vorschlag aus Datenbank für Kaufläche (z. B. Schneidezahn)
   - Automatische Anpassung des Datenbankmodelles an die Gegenbißsituation
   - Suche von Kontaktpunkten mit Hülldaten
   - Zusammenführen von Kaufläche und Innendatensatz

Alternative: Kieferstellung "artikuliert" erfassen durch Scannen eines Teils der artikulierten Kiefer und anschließendes Matchen von Ober- und Unterkieferdaten mit diesen Teildatensätzen zur Erzeugung der Bißstellung.

Auch der vorstehend unter Bezugnahme auf die Fig. 11 und 12 erläuterte Aspekt ist als verfahrens- und vorrichtungsmäßig offenbart anzusehen, da ein Fachmann ohne weiteres anhand der vorstehenden Erläuterungen geeignete Einrichtungen in allgemeiner oder spezieller Ausgestaltung erkennt.

Die Erfindung ist anhand der Ausführungsbeispiele in der Beschreibung und in den Zeichnungen lediglich exemplarisch dargestellt und nicht darauf beschränkt, sondern umfaßt alle Variationen, Modifikationen, Substitutionen und Kombinationen, die der Fachmann den vorliegenden Unterlagen insbesondere im Rahmen der Ansprüche und der allgemeinen Darstellungen in der Einleitung dieser Beschreibung sowie der Beschreibung der Ausführungsbeispiele und deren Darstellungen in der Zeichnung entnehmen und mit seinem fachmännischen Wissen sowie dem Stand der Technik insbesondere unter Einbeziehung der vollständigen Offenbarungsgehalte der in dieser Beschreibung angegebenen älteren Anmeldungen kombinieren kann. Insbesondere sind alle einzelnen Merkmale und Ausgestaltungsmöglichkeiten der Erfindung und der Beispiele und ihrer Ausfüh-rungsbeispiele kombinierbar.

## Patentansprüche

1. Behandlungsplanungsverfahren für Implantate mit den Schritten:
Erfassen von Oberflächendaten von Zähnen;
Eingliedern von Messdaten eines Kieferknochens, wobei die Daten beispielsweise mit einem Computertomographen ermittelt wurden, in eine Behandlungssimulation;
Durchführen der Behandlungssimulation in einer Software, bei der die Zähne und der Kieferknochen in Zahn-/Kieferabschnittsgruppen beispielsweise bis hin zu Einzelzähnen aufgegliedert werden.

## Claims

1. Method of planned treatment for implants with the steps of:
obtaining surface data of teeth;
incorporating of measured data of a jaw bone in a treatment simulation, wherein the data for example have been determined with a computer tomograph;
performing of the treatment simulation in a software, wherein the teeth, and the jaw bone are divided into groups of tooth/jaw sections, for example up to individual teeth.

## Revendications

1. Procédé de planification de traitement pour implants, avec les étapes qui consistent :
à relever des données de surface de dents ;
à intégrer dans une simulation de traitement des données de mesure d'un os maxillaire, les données ayant été recueillies par exemple à l'aide d'un tomographe informatisé ;
à réaliser la simulation de traitement dans un logiciel, lors de laquelle les dents et l'os maxillaire sont divisés en groupes de dents/de parties de maxillaire par exemple jusqu'à des dents individuelles.
